# EUROPÄISCHE PATENTSCHRIFT

(11) **EP 0 669 353 B1**
(45) Veröffentlichungstag und Bekanntmachung des Hinweises auf die Patenterteilung: **18.02.1998**
(21) Anmeldenummer: 94120887.8
(22) Anmeldetag: 29.12.1994
(51) Int. Cl.: C08G 18/79, C08G 18/66, C08G 18/32, C09D 175/04

(54) **Hydroxyl- und uretdiongruppenhaltige Polyadditionsprodukte und Verfahren zu ihrer Herstellung sowie deren Verwendung zur Herstellung abspaltfreier Polyurethan-Pulverlacke hoher Reaktivität und die danach hergestellten Polyurethan-Pulverlacke**
Polyaddition products containing hydroxy- and uretdione groups, process for their preparation and their use for the preparation of polyurethane-powder lacquers having high reactivity and not releasing any decomposition product and polyurethane-powder lacquers prepared by this process
Produits de polyaddition contenant des groupes hydroxy- et uretdione, procédé de leur préparation et leur utilisation pour la préparation de vernis en poudre de polyuréthane à haute réactivité ne relâchant pas de produits de décomposition et vernis en poudre de polyuréthane obtenus par ce procédé

(30) Priorität: 28.02.1994 DE 4406444
(43) Veröffentlichungstag der Anmeldung: 30.08.1995
(73) Patentinhaber: HÜLS AKTIENGESELLSCHAFT, 45764 Marl (DE)
(72) Erfinder: Gras, Rainer, Dr., D-44879 Bochum (DE)

(56) Entgegenhaltungen:
- DE-A- 2 312 391
- FR-A- 2 268 840

## Beschreibung

Hydroxyl- und uretdiongruppenhaltige Polyadditionsprodukte und ein Verfahren zu ihrer Herstellung sowie deren Verwendung zur Herstellung abspaltfreier Polyurethan (PUR)-Pulverlacke höherer Reaktivität, die zu hochglänzenden, licht- und wetterstabilen Lackfilmen vernetzen, und die danach hergestellten Pulverlacke.

In der DE-PS 30 30 572 wird ein Verfahren zur Herstellung von uretdiongruppenhaltigen Polyadditionsprodukten sowie die danach hergestellten Produkte vorgestellt. Dabei handelt es sich um Reaktionsprodukte aus dem isocyanuratfreien Uretdion (UD) des 3-Isocyanatomethyl-3.5.5-trimethylcyclohexylisocyanat (auch Isophorondiisocyanat oder kurz IPDI) - herstellbar gemäß der DE-PS 30 30 513 oder DE-PS 37 39 549 - und Diolen sowie ggf. Monoalkoholen oder -aminen. Die Reaktion kann in Substanz oder auch in Gegenwart geeigneter Lösemittel erfolgen. In der Praxis sind bisher marktrelevante Verkaufsmengen dieser Vernetzerklasse ausschließlich in geeignetem Lösemittel unter schonenden Bedingungen, bei ca. 60 °C, produziert worden, um die thermische Ringöffnung während der Synthese zu vermeiden. Die Herstellung in Substanz ist bisher über den Labormaßstab nicht hinausgekommen, da sich in Abhängigkeit der Vernetzer-Molmasse im Laufe der Reaktion ein hohes Viskositätsniveau aufbaut; Temperaturerhöhung als Maßnahme zur Viskositätsregulierung ist, wie in der DE-PS 30 30 572 angeführt, limitiert.

Dieses Limit ist auch an den Beispielen der DE-PS 30 30 572 abzulesen: es liegt bei einer Molmasse von maximal 3 000 bzw. einem Uretdion/Diol-Molverhältnis von 5 : 4 bei einer Uretdion-Qualität mit einem freien NCO-Gehalt von 17 und einem Gesamt-NCO-Gehalt von 37,8 Gew.-%. Steigt der freie NCO-Gehalt des Isophorondiisocyanat-Uretdions bei konstantem Gesamt-NCO-Gehalt, d. h. der Oligomerisierungsgrad nimmt gleichzeitig ab und damit auch die Molmasse des eingesetzten Uretdions, so sinkt dementsprechend auch die Molmasse der uretdiongruppenhaltigen Polyadditionsprodukte. Die Herstellung uretdiongruppenhaltiger Polyadditionsprodukte mit hohen Molmassen galt im Sinne der Verwendung, nämlich als Vernetzer für die Herstellung von PUR-Pulverlacken, aus oben genannten Gründen als wenig sinnvoll. Das spiegelt sich auch in der DE-PS 30 30 539 und DE-PS 30 30 588 wieder.

In der DE-PS 30 30 539 sind die Molgewichte zwischen 550 und 4 300, vorzugsweise zwischen 1 500 und 2 000 beansprucht, die Uretdion/Diol-Molverhältnisse liegen zwischen 2 : 1 und 6 : 5, vorzugsweise 3 : 2 und 5 : 4.

In der DE-PS 30 30 588 sind die beanspruchten Molgewichte nur unwesentlich verändert, nämlich von 500 bis 4 000, vorzugsweise 1 450 und 2 800 bei einem der DE-PS 30 30 539 vergleichbarem Uretdion/Diol-Molverhältnis.

Entscheidende Nachteile der abspaltfreien PUR-Pulverlacke nach der Lehre der DE-PS 30 30 539 und DE-PS 30 30 588 waren die begrenzten Kombinationsmöglichkeiten mit hydroxylgruppenhaltigen Polymeren: Zum einen - DE-PS 30 30 539 - waren hohe Funktionalitäten von ≥ 3,4 bis ≤ 7, vorzugsweise 3,7 bis 4,5, erforderlich. Um die für qualitativ hochwertige PUR-Pulverlacke hohe Netzwerkdichte zu erzielen, mußten die kettenabbrechenden Bestandteile des Vernetzers kompensiert werden. Zum anderen - DE-PS 30 30 588 - war dem freien NCO-Gehalt der Vernetzer insofern Rechnung zu tragen, daß die Funktionalität der hydroxylgruppenhaltigen Polymeren auf dem freien NCO-Gehalt abzustimmen ist, um Vergelung während der Extrusion zu vermeiden und damit Qualitätseinbußen der Beschichtungen zu unterdrücken. Die OH-Funktionalität mußte auf ≥ 2,2 bis ≤ 3,5, vorzugsweise von 2,5 bis 3,4, begrenzt werden. Es waren und sind immer noch aufwendige Untersuchungen erforderlich, um Harz und Härter aufeinander abzustimmen.

In der Lehre der DE-PS 30 30 572 werden auch uretdiongruppenhaltige Polyadditionsprodukte mit endständigen OH-Gruppen an einem Beispiel beschrieben und beansprucht. Der Umfang entspricht dem oben genannten Polyadditionsprodukt. Für den PUR-Pulverlacksektor haben die OH-terminierten Polyadditionsprodukte bisher jedoch keine Bedeutung erlangt, da der ökonomische Wert im Vergleich zu den anderen Vernetzern nicht gegeben war; siehe Beispiel 5 der DE-PS 30 30 572 im Vergleich zu den restlichen Beispielen. Die Zahlen sprechen für sich. Diese und chemische Gründe, nämlich die unkontrollierte Polyaddition der freien OH-Gruppen mit NCO-Gruppen, die zusäztlich während der Synthese durch Uretdionspaltung entstehen, waren gute Argumente, dieser Art von Vernetzern keine Bedeutung beizumessen.

Die Aufgabe der vorliegenden Erfindung war es daher, Hydroxyl- und uretdionpenhaltige Polyadditionsprodukte zu finden, um diese Vernetzer zur Herstellung abspaltfreier PUR-Pulverlacke zu verwenden sowie die danach hergestellten PUR-Pulverlacke, die die genannten Nachteile des Standes der Technik nicht mehr aufweisen.

Überraschenderweise wurden nun hydroxyl- und uretdiongruppenhaltige Polyadditionsprodukte mit hohen Molmassen gefunden, wobei diese erhältlich sind durch Umsetzung von
I. 40 bis 85 Gew.-% Uretdion des Isophorondiisocyanats und
II. 60 bis 15 Gew.-% Diolen und/oder Kettenverlängerern,
wobei die Polyadditionsprodukte endständig Hydroxylgruppen tragen, eine Funktionalität von 2 aufweisen und die Molmassen zwischen 4 500 und 10 000, vorzugsweise 5 500 und 7 000, liegen und die Umsetzung sowohl im Lösemittel als auch insbesondere lösemittelfrei durchgeführt werden kann.

Weiterhin überraschend war, daß diese Polyadditionsprodukte mit einer Molmasse > 4 500 in Kombination mit hydroxylgruppenhaltigen Polymeren zu PUR-Pulverlacken formulierbar sind, die insbesondere überraschend eine erhöhte Reaktivität aufweisen und zu einem für PUR-Pulverlacke hervorragenden Glanz führen.

Gegenstand der vorliegenden Erfindung sind demnach hydroxyl- und uretdiongruppenhaltige Polyadditionsprodukte aus dem Uretdion des Isophorondiisocyanats und Diolen und/oder Kettenverlängerern gemäß Anspruch 1.

Weiterhin Gegenstand der Erfindung ist die Verwendung der Polyadditionsprodukte in abspaltfreien transparenten oder pigmentierten PUR-Pulverlacken hoher Reaktivität und ausgezeichnetem Glanz, hergestellt aus den blockierungsmittelfreien, hydroxyl- und uretdiongruppenhaltigen, bifunktionellen Polyadditionsprodukten und hydroxylgruppenhaltigen Polymeren sowie den in der PUR-Chemie üblichen Zuschlagsstoffen.

Das isocyanuratfreie Uretdion des Isophorondiisocyanats ist bei Raumtemperatur hochviskos und größer als 10⁶ mPa·s, bei 60 °C liegt die Viskosität bei 13 · 10³ mPa·s und bei 80 °C bei 1,4 · 10³ mPa·s. Der freie NCO-Gehalt liegt zwischen 16,8 und 18,5 Gew.-%, d. h. daß mehr oder minder hohe Anteile an Polyuretdion des IPDI im Reaktionsprodukt vorliegen müssen. Der Monomergehalt liegt bei = 1 %. Der Gesamt-NCO-Gehalt des Reaktionsproduktes nach dem Erhitzen auf 180 - 200 °C beträgt 37,5 - 37,8 Gew.-%.

Für die Herstellung der erfindungsgemäßen hydroxyl- und uretdiongruppenhaltigen Polyadditionsprodukte eignen sich alle in der PUR-Chemie üblicherweise eingesetzten Diole, besonders bevorzugt sind hier jedoch Ethylenglykol (E), Butandiol-1.4 (B), Pentandiol-1.5 (P), Hexandiol-1.6 (HD), 3-Methylpentandiol-1.5 (Pm), 2.2.4(2.4.4)-Trimethylhexandiol (TMH-d.) sowie Hydroxypivalinsäureneopentylglykolester (Eg).

Die erfinderischen Polyadditionsprodukte enthalten vorteilhafterweise Kettenverlängerer in Form von linearen, hydroxylgruppenhaltigen Polyestern mit einer Molmasse zwischen 250 und 2 000, vorzugsweise 300 bis 1 500. Sie werden hergestellt z. B. durch Kombination von Diolen und Dicarbonsäuren.

Zur Herstellung der Kettenverlängerer - lineare hydroxylgruppenhaltige Polyester - werden bevorzugt neben den o. g. Diolen auch 2-Methylpropandiol, 2.2-Dimethylpropandiol (NPG), Diethylenglykol, Dodecandiol-1.12 (C₁₂) sowie trans- und cis-Cyclohexandimethanol (CHDM) eingesetzt.

Zu den bevorzugten Dicarbonsäuren zählen aliphatische, ggf. alkylverzweigt, wie Bernstein-, Adipin- (As), Kork-, Azelain- und Sebacinsäure (Sb), 2.2.4(2.4.4)-Trimethyladipinsäure; weiterhin werden auch Lactone und Hydroxycarbonsäuren wie E-Caprolacton und Hydroxycapronsäure dazu gezählt.

Die erfinderischen Diol/Kettenverlängerer-Gemische werden im Verhältnis von 5 : 95 bis 90 : 10 eingesetzt. Die Herstellung der erfinderischen Produkte kann sowohl im Lösemittel als auch in Substanz, also lösemittelfrei, erfolgen.

Die erfindungsgemäßen Polyadditionsprodukte können u. a. nach dem wie folgt beschriebenen Verfahren erhalten werden.

Die Umsetzung in Lösemittel erfolgt im allgemeinen bei Temperaturen von 50 bis 100 °C, vorzugsweise zwischen 60 und 90 °C. Die OH-Komponente, Diole und/oder Kettenverlängerer, wird vorgelegt und das Uretdion so rasch wie möglich zugesetzt, ohne daß die Reaktionstemperatur die o. g. Grenzen überschreitet. Die Umsetzung ist nach 30 bis 150 Minuten beendet. Anschließend wird das Lösemittel entfernt. Dazu geeignet sind Abdampfschnecken, Filmtruder oder auch Sprühtrockner.

Geeignete Lösemittel sind Benzol, Toluol oder andere aromatische bzw. aliphatische Kohlenwasserstoffe, Essigester wie Ethyl- oder Butylacetat, auch Ketone wie Aceton, Methylethylketon, Methylisobutylketon oder chlorierte aromatische und aliphatische Kohlenwasserstoffe sowie beliebige Gemische dieser oder anderer inerter Lösemittel.

Ein weiterer Gegenstand der Erfindung stellt die lösemittelfreie und kontinuierliche Herstellung der Verfahrensprodukte mittels Intensiv-Kneter in einem Ein- oder Mehrschneckenextruder, insbesondere in einem Zweiwellenextruder dar. Die lösemittelfreie Synthese erfordert Temperaturen deutlich > 120 °C bis 190 °C. Überraschend war, daß für die Uretdion-Synthesen derart hohe Temperaturen zur Anwendung kommen können. Diese Temperaturen liegen bereits deutlich im Respaltbereich für Uretdione, so daß hohe freie Isocyanatgehalte resultieren können und damit unkontrollierte Reaktionsabläufe zu erwarten wären. Diese Tatsache war für die hydroxylgruppenhaltigen Uretdion-Polyadditionsprodukt-Synthese bedeutungsvoll und um so überraschender war es, daß sie realisiert werden konnte. Als vorteilhaft erwiesen sich dabei die kurzen Reaktionszeiten von < 5 Minuten, vorzugsweise < 3 Minuten, insbesondere < 2 Minuten.

Weiterhin von prinzipieller Natur ist, daß die kurzzeitige thermische Belastung ausreicht, um die Reaktionspartner homogen zu mischen und dabei vollständig oder weitgehendst umzusetzen. Anschließend wird entsprechend der Gleichgewichtseinstellung gezielt abgekühlt und, falls erforderlich, der Umsatz vervollständigt.

Die Umsetzungsprodukte werden dem Reaktionskneter in getrennten Produktströmen zugeführt, wobei die Ausgangskomponenten bis auf 100 °C, vorzugsweise bis 80 °C, vorgewärmt werden können. Handelt es sich um mehr als zwei Produktströme, können diese auch gebündelt zudosiert werden. Diol und/oder Kettenverlängerer und/oder Katalysatoren und/oder weiter übliche Lack-Zuschlagstoffe wie Verlaufsmittel und/oder Stabilisatoren können zu einem Produktstrom zusammengefaßt werden; ebenso die, die gegenüber Isocyanatgruppen inert sind: Katalysatoren sowie entsprechend oben genannte Lack-Zuschlagstoffe.

Ebenfalls kann die Reihenfolge der Produktströme variabel gehandhabt werden sowie die Eintrittsstelle für die Produktströme unterschiedlich sein.

Zur Nachreaktion, Abkühlung, Zerkleinerung und Absackung werden bekannte Verfahren und Technologien verwendet.

Zur Beschleunigung der Polyadditionsreaktion können auch die in der PUR-Chemie üblichen Katalysatoren verwendet werden. Sie werden in einer Konzentration von 0,01 bis 1 Gew.-%, vorzugsweise von 0,03 bis 0,5 Gew.-%, bezogen auf die eingesetzten Reaktionskomponenten, eingesetzt. Als besonders geeignet erwiesen sich bisher Zinn-II- und -IV-verbindungen. Genannt wird hier besonders Dibutylzinndilaurat (DBTL). Andere Katalysatoren sind jedoch nicht von vornherein als ungeeignet anzusehen.

Ein weiterer Gegenstand der vorliegenden Erfindung ist die Verwendung der erfindungsgemäßen hydroxyl- und uretdiongruppenhaltigen Polyuretdionadditionsprodukte in PUR-Pulverlacken, die sich überraschenderweise durch erhöhte Reaktivität auszeichnen. Die Härtungsbedingungen konnten somit völlig überraschend gegenüber den bisher bekannten deutlich reduziert werden, was sowohl ökonomisch als auch ökologisch bedeutungsvoll ist. Ein weiterer Gegenstand der vorliegenden Erfindung sind abspaltfreie Polyurethan-Pulverlacke bestehend aus den erfindungsgemäßen Polyadditionsprodukten in Kombination mit hydroxylgruppenhaltigen Polymeren. Als Reaktionspartner für PUR-Pulverlacke kommen Verbindungen in Frage, welche solche funktionellen Gruppen tragen, die sich mit Isocyanatgruppen während des Härtungsprozesses in Abhängigkeit von der Temperatur und Zeit umsetzen, z. B. Hydroxyl-, Carboxyl-, Mercapto-, Amino-, Urethan-, (Thio)Harnstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyesteramide, Epoxidharze mit Hydroxylgruppen im Molekül, Aminoplaste und ihre Modifizierungsprodukte mit polyfunktionellen Alkoholen, Polyazomethine, Polyurethane, Polysulfonamide, Melaminabkömmlinge, Celluloseester und -ether, teilweise verseifte Homo- und Copolymerisate von Vinylestern, insbesondere aber Polyester und Acrylatharze.

Für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin- (As), Kork-, Azelain, Sebacin-, Phthal-, Terephthal- (Ts), Isophthal- (Is), Trimellit-, Pyromellit-, Tetrahydrophthal-, Hexahydrophthal-, Hexahydroterephthal-, Di- und Tetrachlorphthal-, Endomethylentetrahydrophthal-, Glutar-, Malein- und Fumarsäure bzw. - soweit zugänglich - deren Anhydride, Terephthalsäuredimethylester (DMT), Terephthalsäure-bis-glykolester, weiterhin cyclische Monocarbonsäure wie Benzoesäure, p-tert.-Butylbenzoesäure oder Hexahydrobenzoesäure.

Als mehrwertige Alkohole kommen z. B. Ethylenglykol, Propylenglykol-1.2 und -1.3, Butylenglykol-1.4 und -2.3, Di-β-hydroxyethylbutandiol, Hexandiol-1.6, Octandiol-1.8, Neopentylglykol, Cyclohexandiol, Bis-(1.4-hydroxymethyl)-cyclohexan, 2.2-Bis-(4-hydroxycyclohexyl)-propan, 2.2-Bis-[4-(β-hydroxyethoxy)-phenyl]-propan, 2-Methyl-propandiol-1.3, 3-Methylpentandiol-1.5, 2.2.4(2.4.4)-Trimethylhexandiol-1.6, Glycerin, Trimethylolpropan, Trimethylolethan, Hexantriol-1.2.6, Butantriol-1.2.4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, in Frage.

Auch Mono- und Polyester als Lactone, z. B. ε-Caprolacton oder Hydroxycarbonsäuren, z. B. Hydroxypivalinsäure, Ω-Hydroxydecansäure, Ω-Hydroxycapronsäure, Thioglykolsäure, können eingesetzt werden. Polyester aus den obengenannten Polycarbonsäuren bzw. deren Derivaten und Polyphenolen, wie Hydrochinon, Bisphenol-A, 4.4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1.6 und anderen Polyolen durch übliche Kondensationsreaktionen, z. B. mit Phosgen- oder Diethyl- bzw. Diphenylcarbonat, oder aus cyclischen Carbonaten wie Glykolcarbonat oder Vinylidencarbonat, durch Polymerisation in bekannter Weise erhältlich sind; Polyester der Kieselsäure, Polyester der Phosphorsäure, z. B. aus Methan-, Ethan-, β-Chlorethan-, Benzol- oder Styrolphosphorsäure-, -phosphorsäurechlorid oder -phosphorsäureester und Polyalkoholen oder Polyphenolen der obengenannten Art; Polyester der Borsäure; Polysiloxane, wie z. B. die durch Hydrolyse von Dialkyldichlorsilanen mit Wasser und nachfolgende Behandlung mit Polyalkoholen, die durch Anlagerung von Polysiloxandihydriden an Olefinen, wie Alkylalkohol oder Acrylsäure, erhältlichen Produkte.

Bevorzugte Polyester sind z. B. auch die Reaktionsprodukte von Polycarbonsäuren und Glycidylverbindungen, wie sie z. B. in der DE-PS 24 10 513 beschrieben sind.

Die besonders bevorzugt eingesetzten hydroxylgruppenhaltigen Polyester haben eine OH-Funktionalität von > 2, eine OH-Zahl von 20 bis 200 mg KOH/g, vorzugsweise von 30 bis 150 mg KOH/g, eine Viskosität von < 60 000 mPa·s, vorzugsweise < 40 000 mPa·s bei 140 °C und einem Schmelzpunkt von > 70 °C bis ≤ 120 °C, vorzugsweise von 75 °C bis 100 °C aufzuweisen.

Beispiele für Glycidylverbindungen, die verwendet werden können, sind Ester des 2.3-Epoxy-1-propanols mit monobasischen Säuren, die 4 bis 18 Kohlenstoffatome haben, wie Glycidylpalmitat, Glycidyllaurat und Gylcidylstearat, Alkylenoxide mit 4 bis 18 Kohlenstoffatomen, wie Butylenoxid und Glycidylether, wie Octylglycidylether.

Als Dicarbonsäuren können bei diesem Verfahren sämtliche unter 2 im folgenden aufgeführte Polycarbonsäuren verwendet werden, Monocarbonsäuren, welche beispielsweise unter 3 aufgeführt sind, können ebenfalls eingesetzt werden.

Bevorzugte Komponenten sind auch monomere Ester, z. B. Dicarbonsäure-bis(hydroxy(alkohol)ester, Monocarbonsäureester von mehr als zweiwertigen Polyolen und Oligoester, die durch Kondensationsreaktionen aus in der Lackchemie üblichen Rohstoffen hergestellt werden können. Als solche sind z. B. anzusehen:
1. Alkohole mit 2 bis 24, vorzugsweise 2 bis 10 C-Atomen, und 2 bis 6 an nicht-aromatischen C-Atomen gebundenen OH-Gruppen, z. B. Ethylenglykol, Propylenglykol, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit;
2. Di- und Polycarbonsäuren mit 4 bis 36 C-Atomen und 2 bis 4 Carboxylgruppen sowie deren veresterungsfähige Derivate, wie Anhydride und Ester, z. B. Phthalsäure(anhydrid), Isophthalsäure, Terephthalsäure, Alkyltetrahydrophthalsäure, Endomethylentetrahydrophthalsäureanhydrid, Adipinsäure, Bernsteinsäure, Maleinsäure, Fumarsäure, Dimerfettsäuren, Trimellithsäure, Pyromellitsäure, Azelainsäure;
3. Monocarbonsäuren mit 6 bis 24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosfettsäure, Sojaölfettsäure, Ricinenfettsäure, hydrierte und isomerisierte Fettsäuren, wie "Konjuvandol"-Fettsäure sowie deren Gemische, wobei die Fettsäuren auch als Glyceride einsetzbar sind und unter Umesterung und/oder Dehydratisierung umgesetzt werden können.;
4. einwertige Alkohole mit 1 bis 18 C-Atomen, z. B. Methanol, Ethanol, Isopropanol, Cyclohexanol, Benzylalkohol, Isodecanol, Nonanol, Octanol, Oleylalkohol.

Die Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl), Bd. 14/2, 1 - 5, 21 23, 40 44, Georg Thieme Verlag, Stuttgart, 1963 oder bei C. R. Martens, Alkyd Resins, 51 - 59, Reinhold Plastics Appl. Series, Reinhold Publishing Comp., New York, 1961, beschrieben ist.

Bevorzugte Acrylatharze, welche als OH-Komponente verwendet werden können, sind Homo- oder Copolymerisate, wobei z. B. folgende Monomere als Ausgangsprodukte gewählt werden können: Ester der Acrylsäure und Methacrylsäure mit zweiwertigen, gesättigten, aliphatischen Alkoholen mit 2 bis 4 C-Atomen, wie z. B. 2-Hydroxyethylacrylat, 2-Hydroxypropylacrylat, 4-Hydroxybutylacrylat und die entsprechenden Methacrylsäureester; Acrylsäure und Methacrylsäurealkylester mit 1 bis 18 C-Atomen in der Alkoholkomponente, wie z. B. Methacrylat, Ethylacrylat, Propylacrylat, Isopropylacrylat, n-Butylacrylat, tert.-Butylacrylat, 2-Ethylhexylacrylat, Stearylacrylat und die entsprechenden Methacrylatsäureester; Acrylsäure- und Methacrylsäurecyclohexylester; Acrylnitril und Methacrylnitril, Acrylamid und Methacrylamid; N-Methoxymethyl(meth)acrylsäureamid.

Besonders bevorzugte Acrylatharze sind Copolymere aus
a. 0 bis 50 Gew.-% Ester der Acryl- oder Methacrylsäure mit zwei oder mehrwertigen Alkoholen, wie Butandiol-(1.4)-monoacrylat, Hydroxypropyl(meth)acrylat; ferner Vinylglykol, Vinylthioethanol, Allylalkohol, Butandiol-1.4-monovinylether;
b. 5 bis 95 Gew.-% Ester der Acrylsäure oder Methacrylsäure mit einwertigen Alkoholen, die 1 bis 12 Kohlenwasserstoffatome enthalten, wie z. B. Methylmethacrylat, Ethylacrylat, n-Butylacrylat oder 2-Ethylhexylacrylat;
c. 0 bis 50 Gew.-% aromatischer Vinylverbindungen, wie Styrol, Methylstyrol oder Vinyltoluol;
d. 0 bis 20 Gew.-% anderer Monomere mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder N-Methylol(meth)acrylamid sowie Gycidyl(meth)acrylat, wobei der Anteil der Gruppe a. und/oder b. mindestens 5 Gew.-% betragen.

Die Acrylatharze können nach den üblichen Methoden hergestellt werden, also durch Lösungs-, Suspensions-, Emulsions- oder Fällungspolymerisation; bevorzugt aber durch Substanzpolymerisation, die ihrerseits mittels UV-Licht initiiert werden kann.

Als weitere Polymerisationsinitiatoren werden die üblichen Peroxide oder Azoverbindungen, wie z. B. Dibenzoylperoxid, tert.-Butylperbenzoat oder Azodiisobutyronitril verwendet. Das Molekulargewicht kann z. B. mit Schwefelverbindungen, wie tert.-Dodecylmercaptan, geregelt werden.

Bevorzugte Polyether können z. B. durch Polyaddition von Epoxiden, wie Ethylenoxid, Propylenoxid, Butylenoxid, Trimethylenoxid, 3,3-Bis-(chlormethyl)-oxacyclobutan, Tetrahydrofuran, Styroloxid, dem Bis-(2.5)-epoxypropylether des Diphenylolpropans oder Epichlorhydrin mit sich selbst, z. B. in Gegenwart von BF₃, oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Ethylenglykol, Propylenglykol-(1.3) oder -(1.2), Pentamethylenglykol, Hexandiol, Decamethylengylkol, Trimethylolpropan, 4.4'-Dihydroxydiphenylpropan, Anilin, Ammoniak, Ethanolamin, Ethylendiamin, Di(β-hydroxypropyl)-methylamin, Di-(β-hydroxyethyl)-anilin, Hydrazin sowie auch hydroxyalkyPhenolen, wie z. B. Di-(β-hydroxyethoxy)-resorcin, hergestellt werden.

Ebenso können hydroxylgruppenhaltige Polyurethane und/oder Polyharnstoffe eingesetzt werden.

Als hydroxylgruppenhaltige Polymere können selbstverständlich auch Gemische mehrerer Stoffe eingesetzt werden.

Das Mischungsverhältnis der hydroxylgruppenhaltigen Polymeren und den hydroxyl- und uretdiongruppenhaltigen Polyadditionsprodukten (Vernetzern) wird in der Regel so gewählt, daß auf eine OH-Gruppe 0,5 - 1,2, bevorzugt 0,8 - 1,1, ganz besonders bevorzugt 1,0 NCO-Gruppe kommt.

Die Isocyanatkomponente wird für die Herstellung von PUR-Pulverlacken mit dem geeigneten hydroxylgruppenhaltigen Polymeren und gegebenenfalls Katalysatoren sowie Pigmenten und üblichen Hilfsmitteln, wie Füllstoffen und Verlaufsmitteln, z. B. Siliconöl, Acrylatharzen, gemischt und in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, elektrostatisches Wirbelsintern, erfolgen. Nach dem Pulverauftrag werden die beschichteten Werkstücke zur Aushärtung 60 bis 4 Minuten auf eine Temperatur von 150 bis 220 °C, vorzugsweise 30 bis 6 Minuten bei 160 bis 200 °C, erhitzt.

Nachfolgend wird der Gegenstand der Erfindung anhand von Beispielen näher erläutert.

### A Herstellung der erfindungsgemäßen hydroxyl- und uretdiongruppenhaltigen Polyadditionsprodukte

### A 1 Polyol-Kettenverlängerer

### Allgemeine Herstellungsvorschrift

Die Ausgangskomponenten - vgl. Tabelle 1 - werden in einen Reaktor gegeben und mit Hilfe eines Ölbades auf ≈ 140 °C erhitzt. Nachdem die Stoffe zum größten Teil geschmolzen sind, werden 0,1 Gew.-% Di-n-butylzinnoxid als Katalysator zugesetzt. Die erste Wasserabspaltung tritt bei 150 bis 160 °C auf. Innerhalb von 2 bis 3 Stunden wird die Temperatur auf 180 °C bis 190 °C erhöht und die Veresterung während weiteren 8 bis 10 Stunden zu Ende gebracht. Während der gesamten Reaktionszeit wird das Sumpfprodukt gerührt und ein schwacher Stickstoffstrom durch das Reaktionsgemisch geleitet. Die Säurezahl der Polyester lag stets < 2 mg KOH/g.

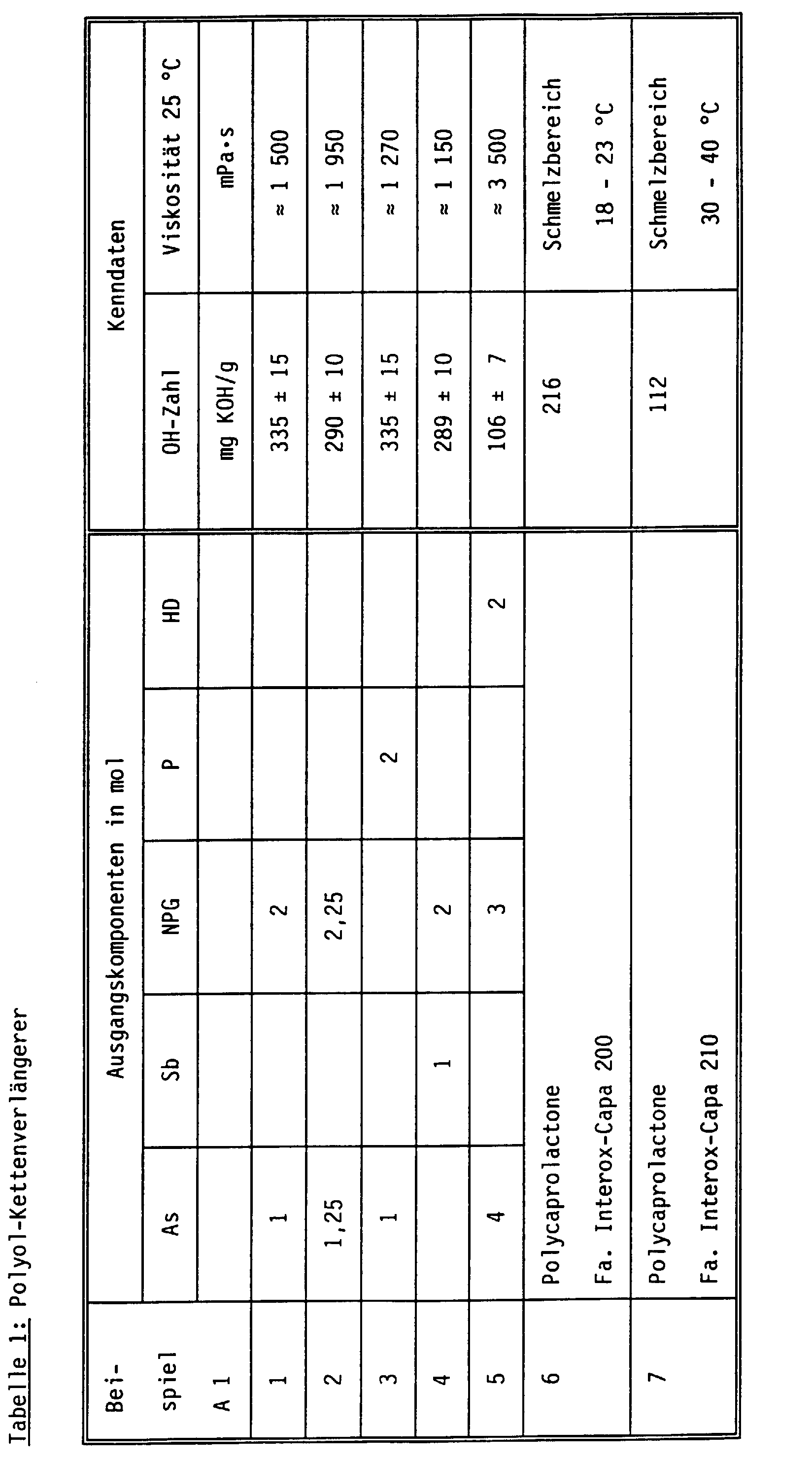

### A 2 Hydroxyl- und uretdiongruppenhaltige Polyadditionsprodukte

Allgemeine Herstellungsvorschriften

### A 2.1 aus Lösemittel

Die Polyol-Komponente - vgl. Tabelle 2 - und der Katalysator (0,03 - 0,5 Gew.-% DBTL) werden, gelöst im Lösemittel, im Reaktor vorgelegt. Unter starkem Rühren und Inertgasatmosphäre wird die berechnete Menge IPDI-Uretdion, gelöst im Lösemittel, so schnell zugesetzt, daß die Reaktionstemperatur 100 °C nicht übersteigt. Die Umsetzung wird mittels titrimetrischer NCO-Bestimmung kontrolliert und ist nach 1 bis 3 Stunden beendet. Danach wird das Lösemittel entfernt, das Produkt abgekühlt und ggf. zerkleinert.

### A 2.2 lösemittelfrei

In die Einzugsgehäuse eines Doppelschneckenextruders wurde das IPDI-Uretdion mit einer Temperatur von 60 bis 110 °C eingespeist, wobei gleichzeitig die Polyol-Komponente - vgl. Tabelle 2 - mit einer Temperatur von 25 bis 110 °C zudosiert wurde. Das Uretdion bzw. die Polyolkomponente enthielt ggf. die erforderliche Katalysatormenge - 0,03 bis 0,5 Gew.-% DBTL - bezogen auf das Endprodukt.

Der eingesetzte Extruder setzt sich aus zehn Gehäusen zusammen, davon fünf Heizzonen. Die Temperaturen der Heizzonen unterliegen einem großen Bereich - zwischen 50 und 180 °C - und können einzeln gesteuert werden. Alle Temperaturen sind Soll-Temperaturen, die Regelung in den Gehäusen erfolgt durch elektrische Heizung und pneumatische Kühlung. Das Düsenelement wird mittels Ölthermostat beheizt. Die Drehzahl der Doppelschnecke, aufgebaut mit Förderelementen, lag zwischen 50 und 380 Upm.

Das Reaktionsprodukt, das von 10 bis 130 kg/h anfällt, wird entweder abgekühlt, anschließend zerkleinert oder formiert und abgesackt oder bereits die Schmelze formiert, abgekühlt und abgesackt.

Die physikalischen und chemischen Kenndaten der erfinderischen Verfahrensprodukte sowie die molaren Zusammensetzungen sind in Tabelle 2 zusammengefaßt.

Das nach bekanntem Verfahren produzierte IPDI-Uretdion hatte folgende NCO-Kenndaten:
frei: 16,8 bis 18,5 Gew.-%
gesamt: 37,5 bis 37,8 Gew.-%

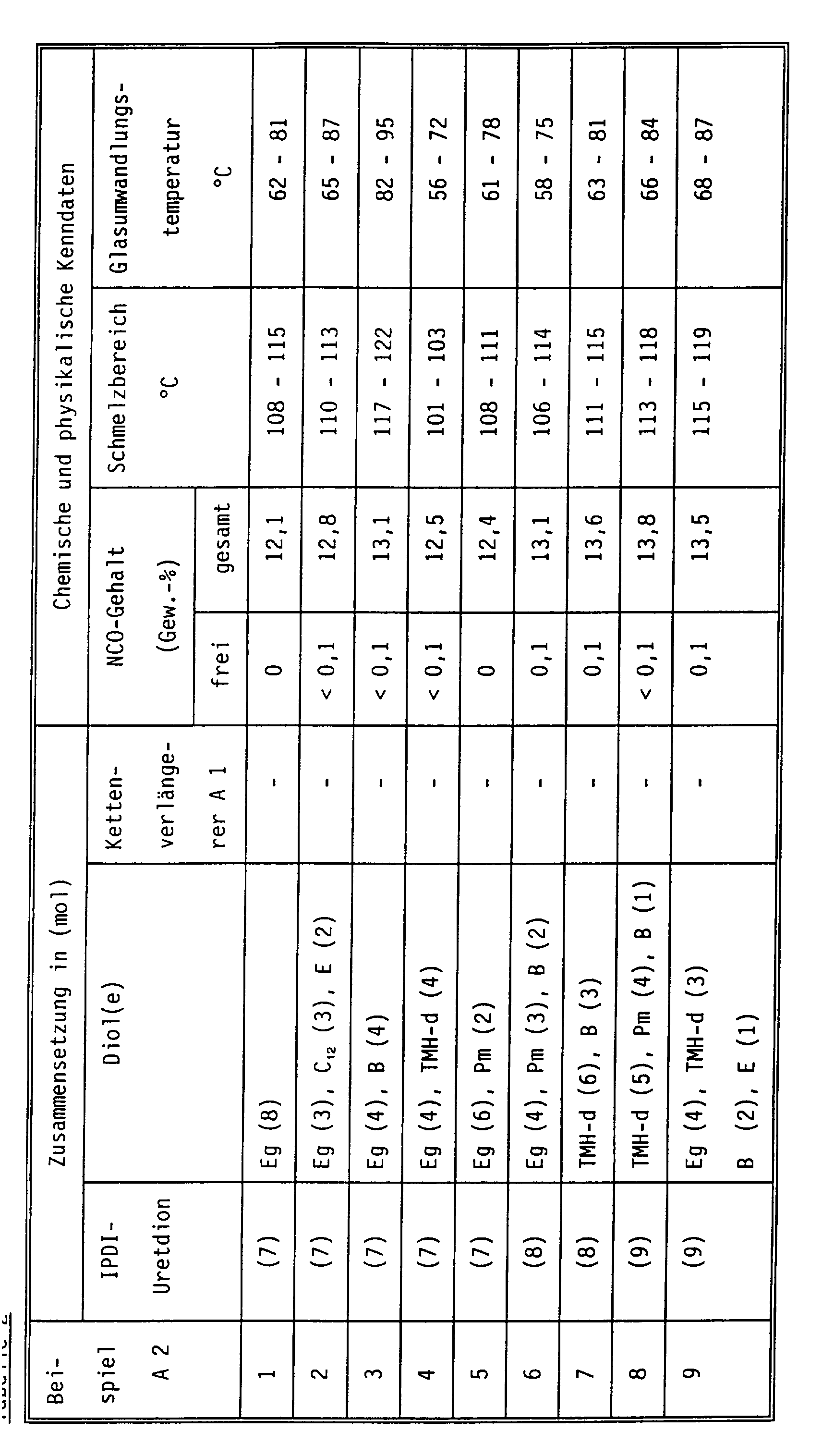

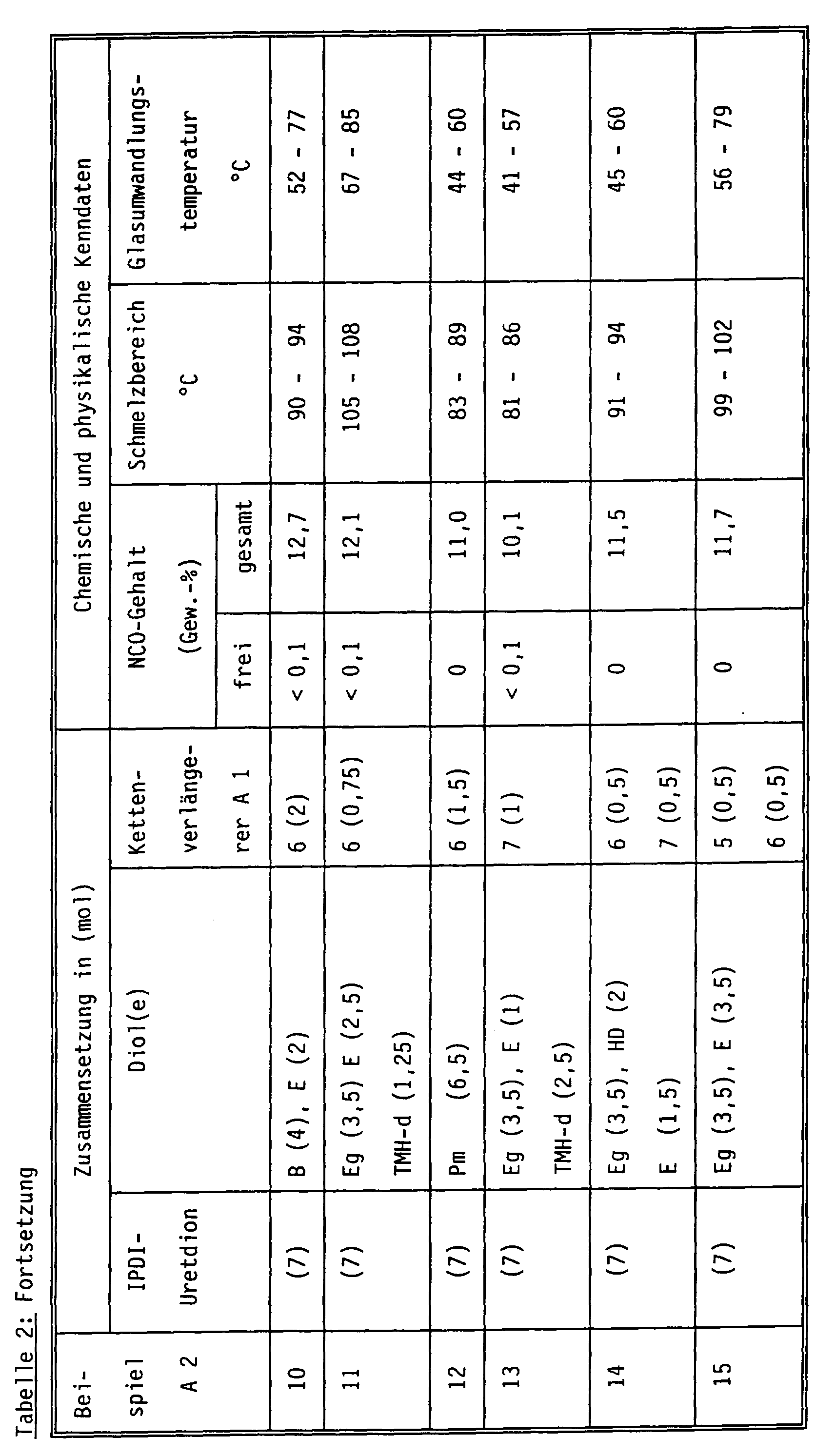

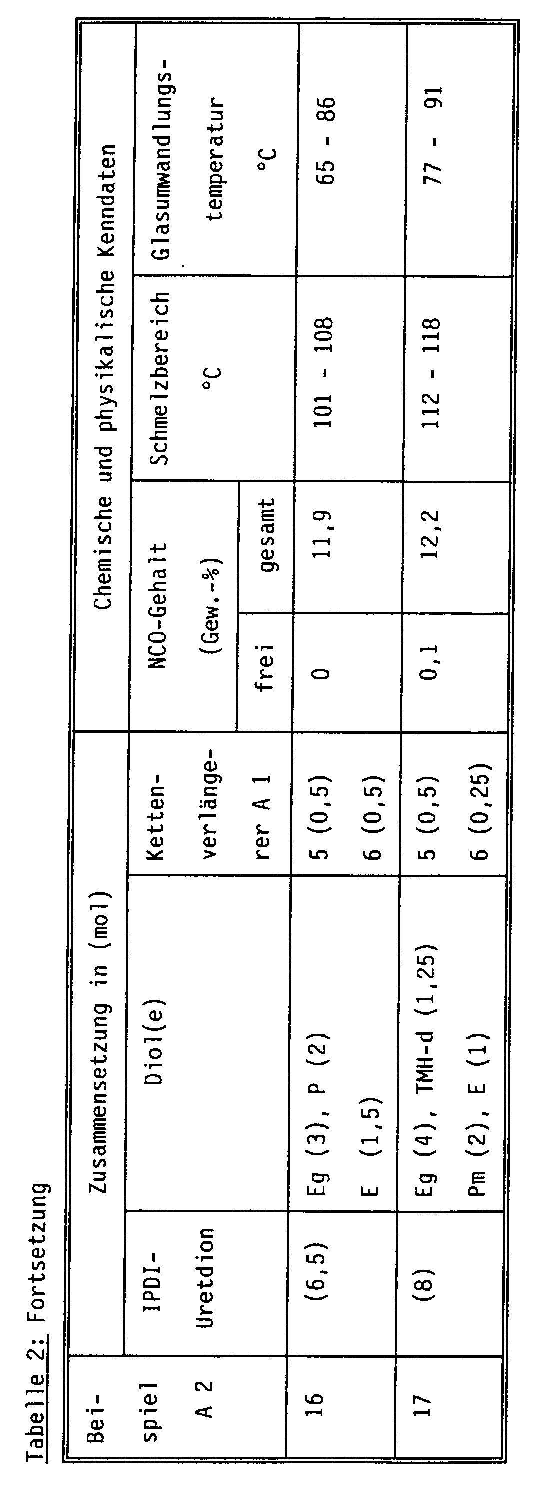

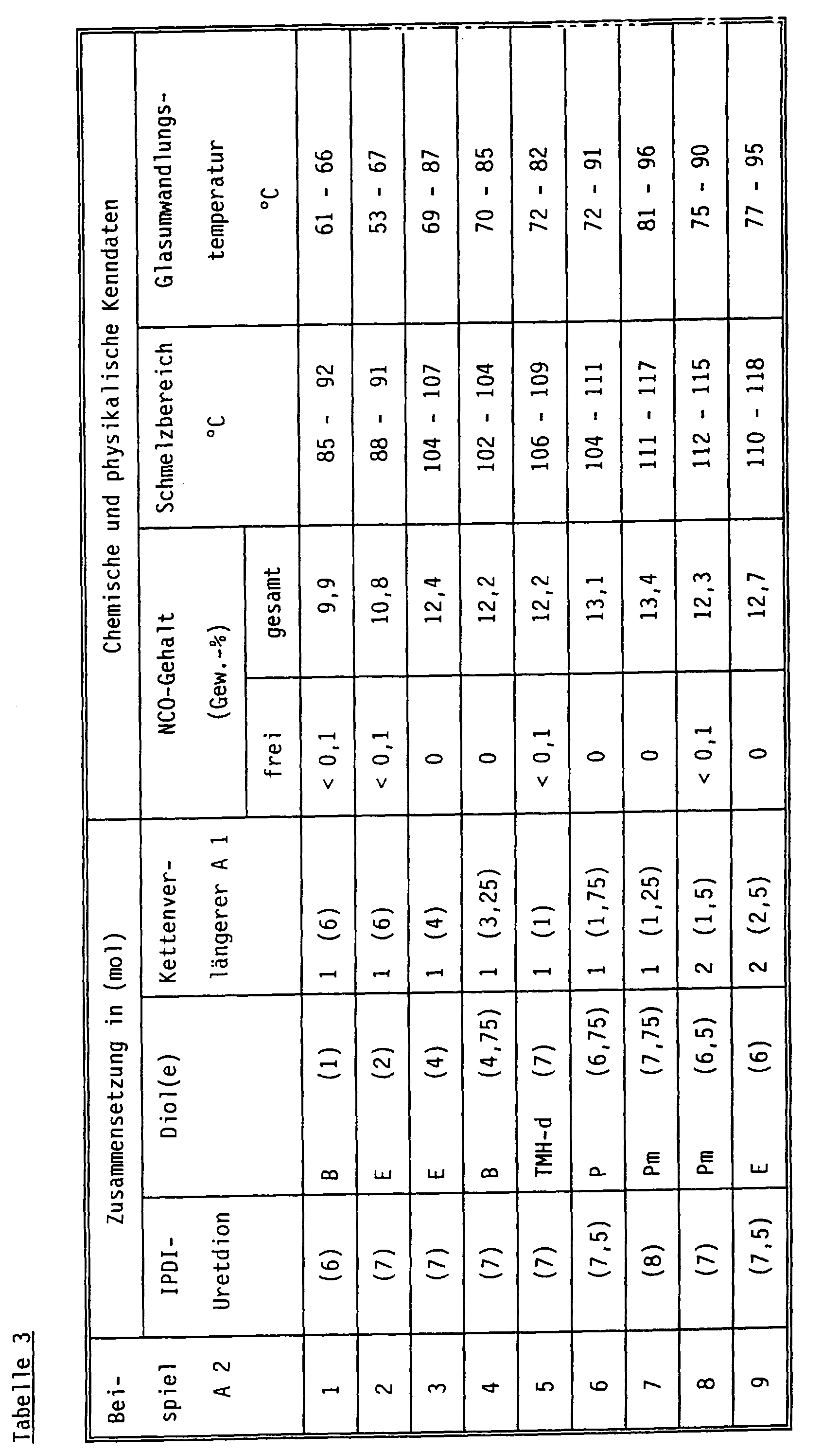

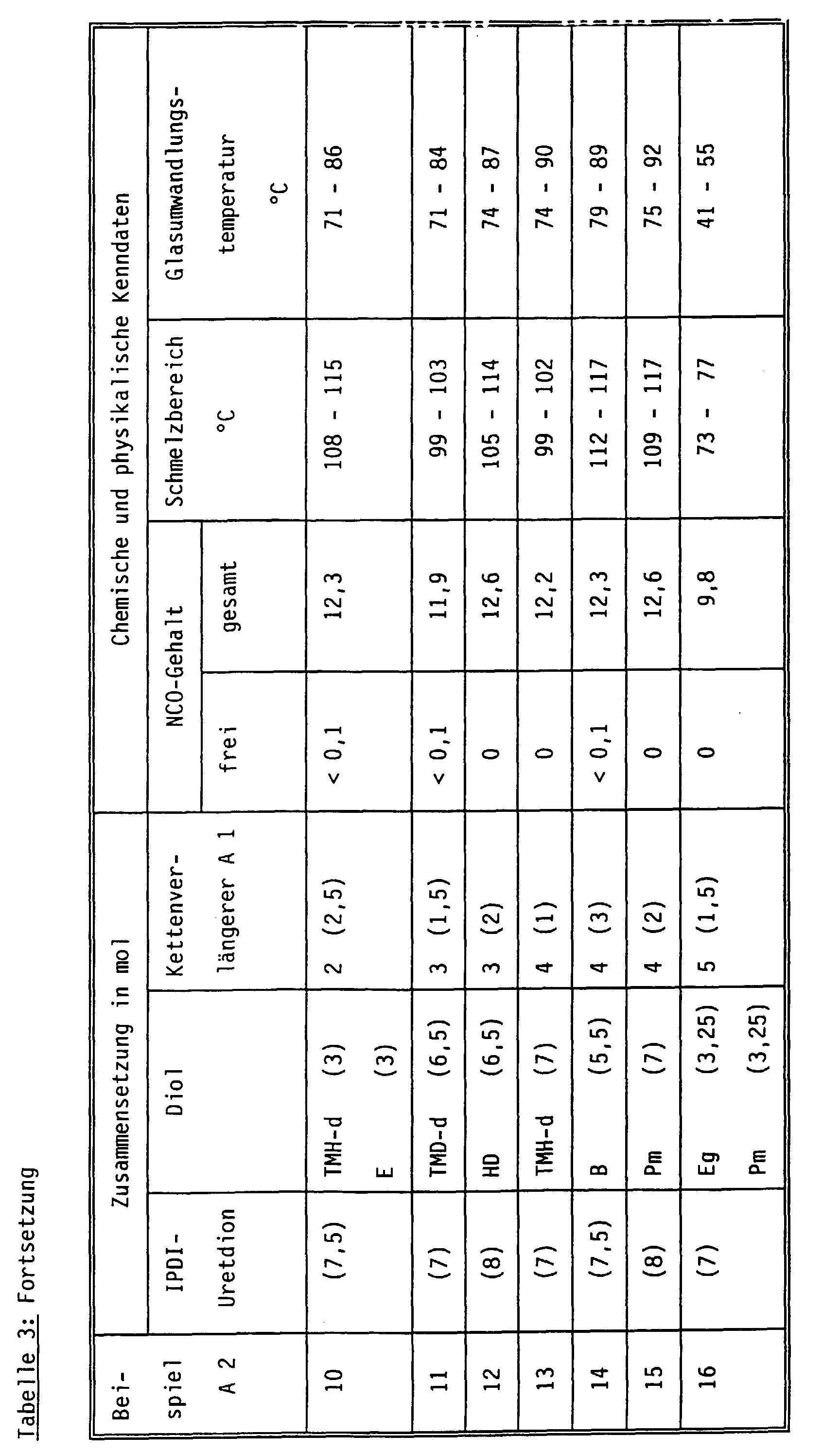

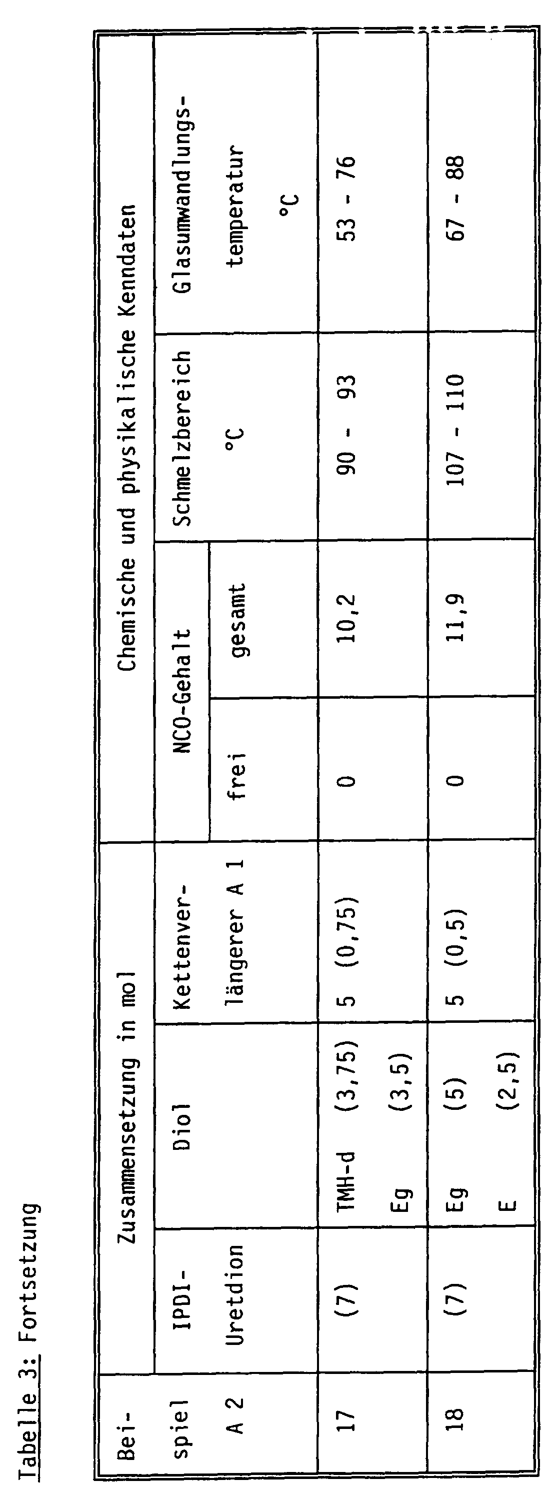

### B Polyester

Die folgende Tabelle 4 gibt einen Überblick über die zur Formulierung von PUR-Pulverlacken eingesetzten Markt-Polyester.

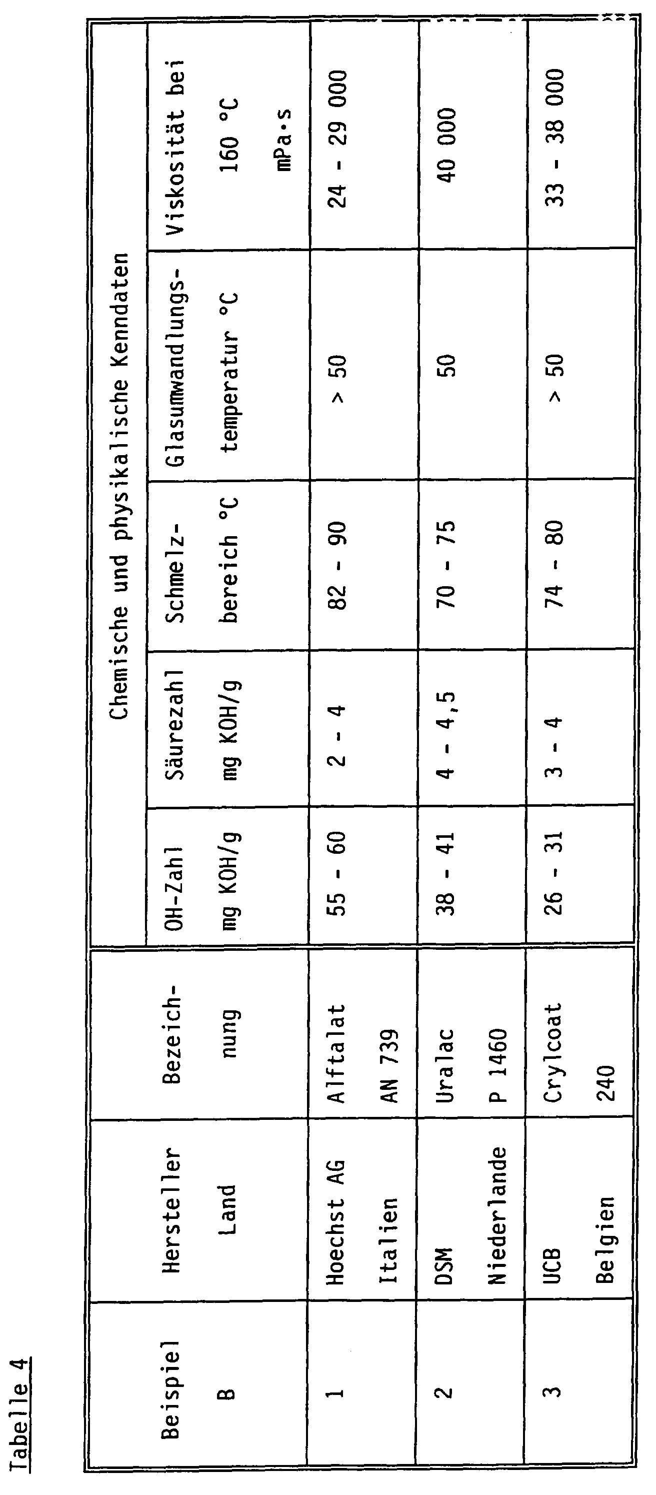

### C Polyurethan-Pulverlacke

### Allgemeine Herstellungsvorschrift

Die zerkleinerten Produkte, Vernetzer, Polyester, Verlaufsmittel-, ggf. Katalysator-Masterbatch, werden ggf. mit dem Weißpigment in einem Kollergang innig vermischt und anschließend im Extruder bis maximal 130 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umlufttrockenschrank bei Temperaturen zwischen 160 und 200 °C eingebrannt.

### Verlaufsmittel-Masterbatch

Es werden 10 Gewichtsprozent des Verlaufsmittels - ein handelsübliches Copolymer von Butylacrylat und 2-Ethylhexylacrylat - in dem entsprechenden Polyester in der Schmelze homogenisiert und nach dem Erstarren zerkleinert.

### Katalysator-Masterbatch

Es werden 5 Gewichtsprozent des Katalysators - DBTL - in dem entsprechenden Polyester in der Schmelze homogenisiert und nach dem Erstarren zerkleinert.

Die Abkürzungen in den folgenden Tabellen bedeuten:

| | | |
|---|---|---|
| SD | = Schichtdicke in µm | |
| HK | = Härte nach König (sec) | (DIN 53 157) |
| HB | = Härte nach Buchholz | (DIN 53 153) |
| ET | = Tiefung nach Erichsen | (DIN 53 156) |
| GS | = Gitterschnittprüfung | (DIN 53 151) |
| GG 60 °≮ | = Messung des Glanzes n. Gardner | (ASTM-D 5233) |
| Imp rev. | = Impact reverse in g·m | |

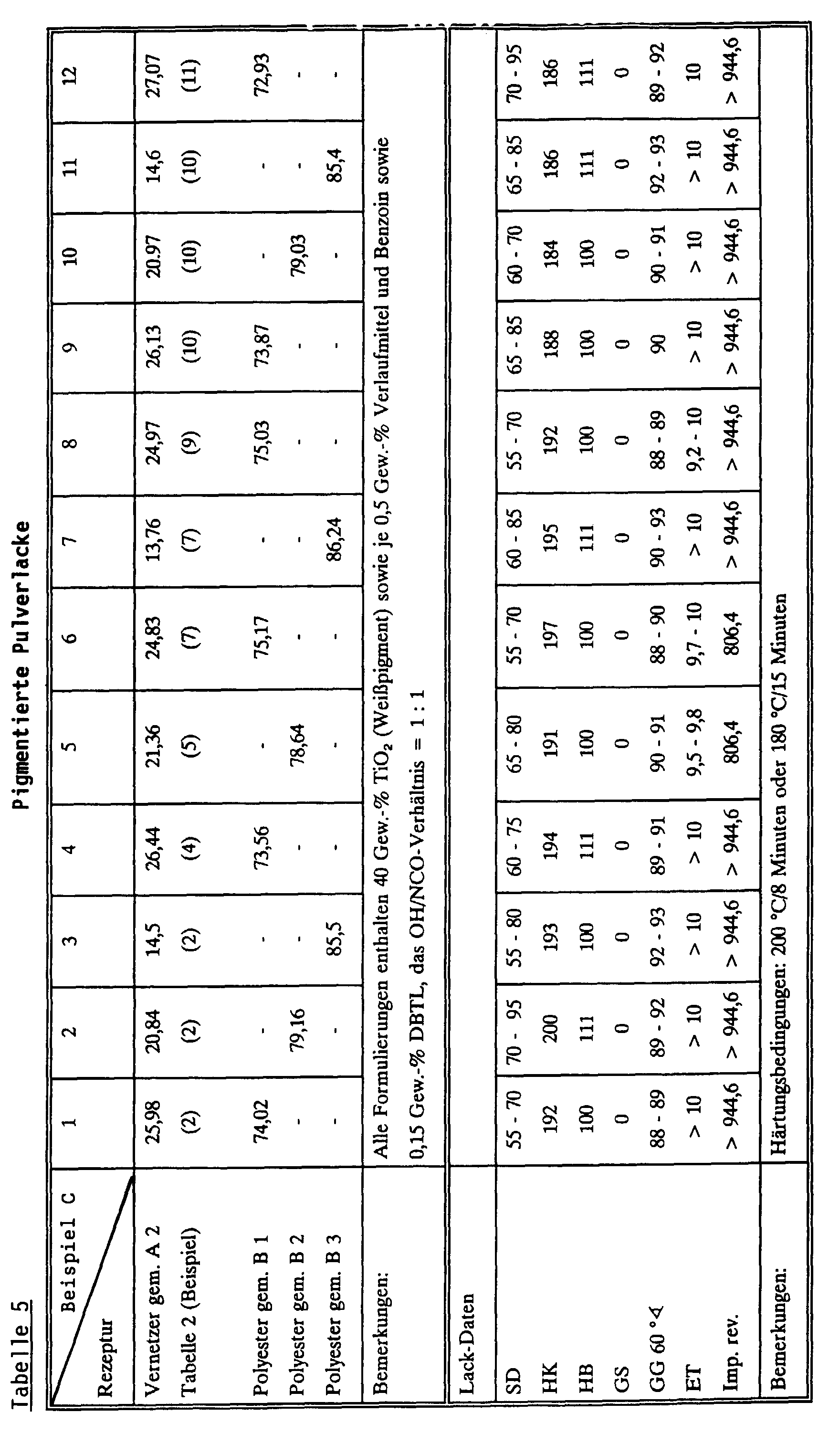

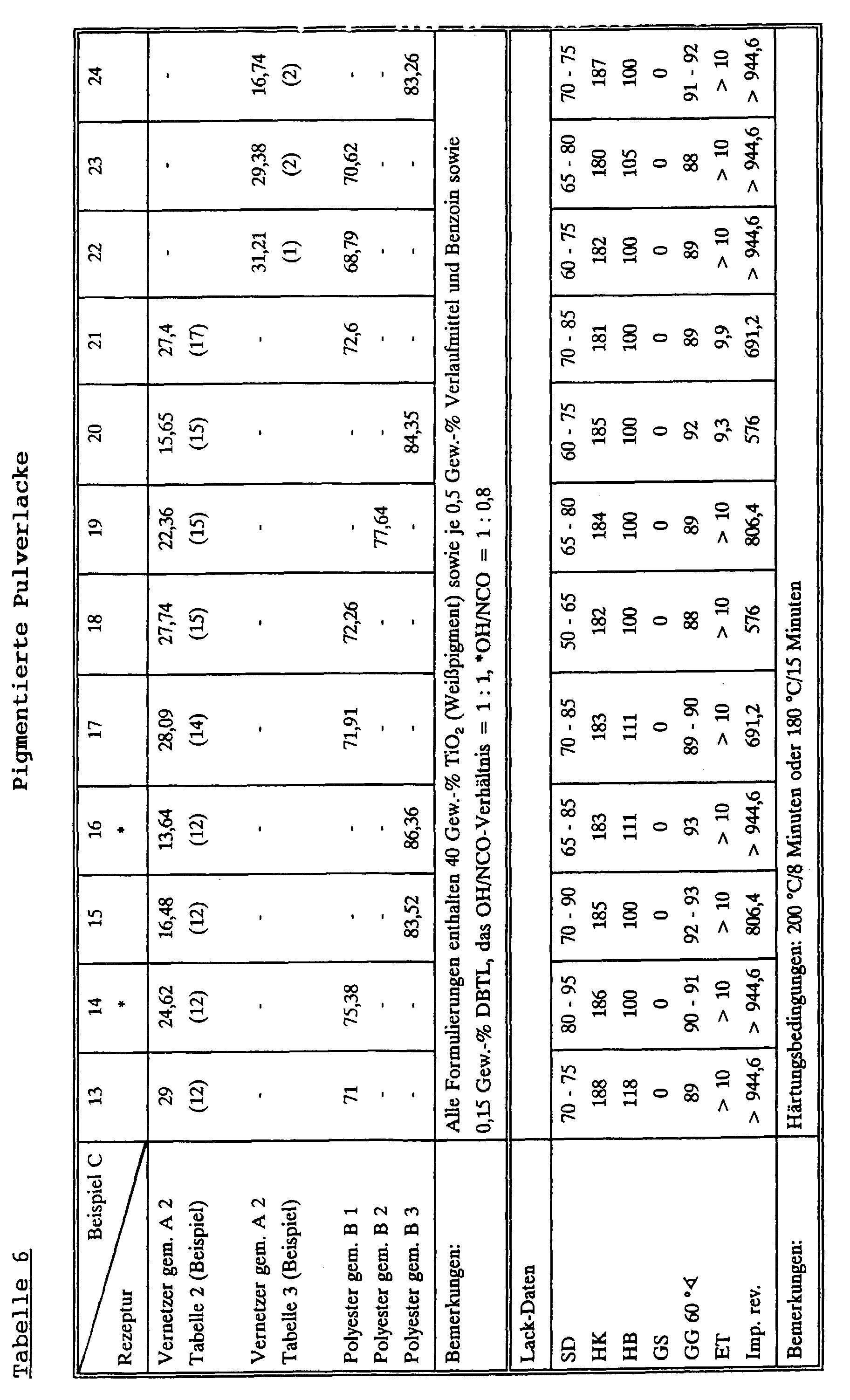

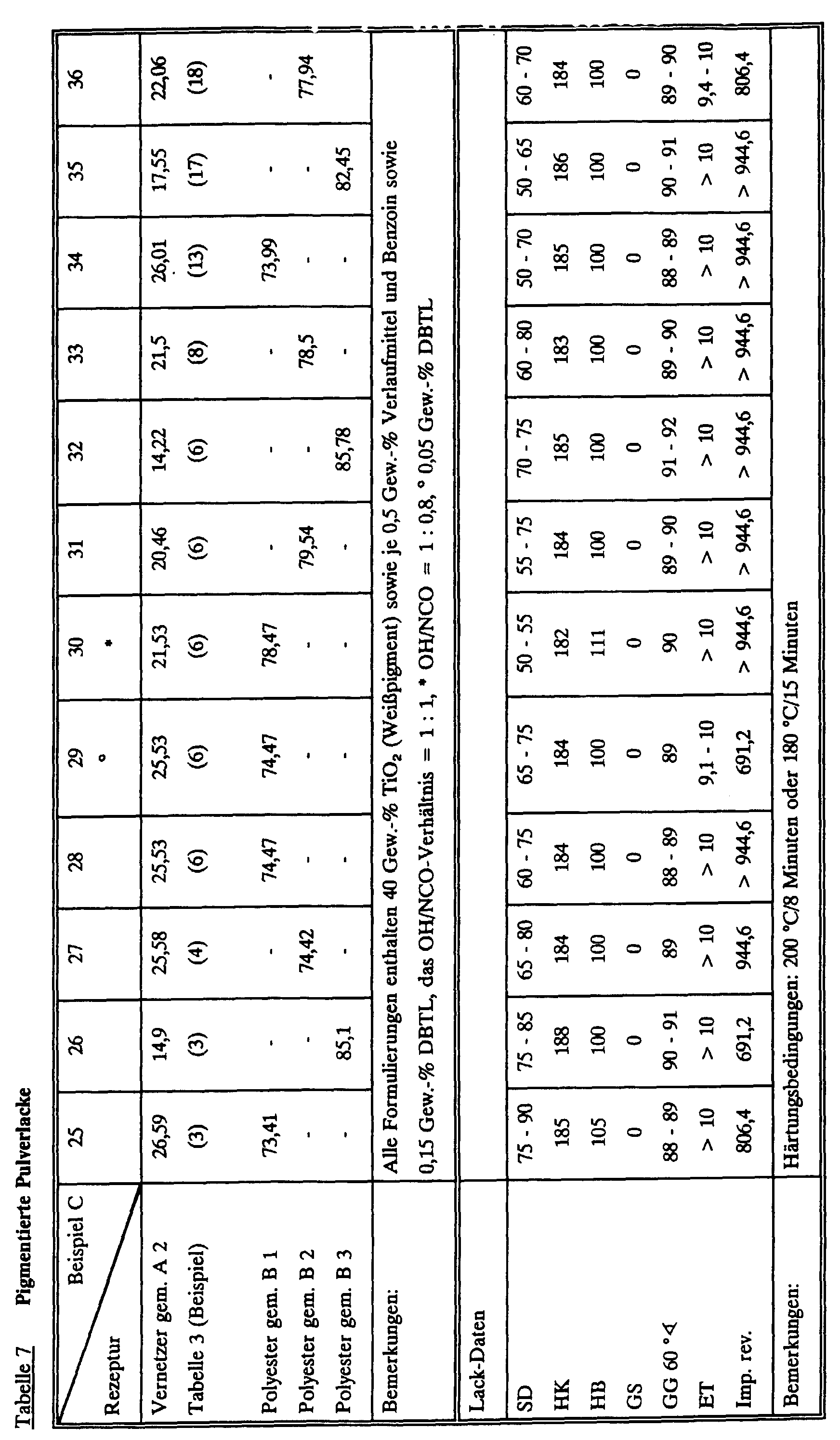

## Patentansprüche

1. Hydroxyl- und uretdiongruppenhaltige Polyadditionsprodukte aus dem Uretdion des Isophorondiisocyanats und Diolen und/oder Kettenverlängerern, erhältlich durch Umsetzung von
I. 40 bis 85 Gew.-% Uretdion des Isophorondiisocyanats und
II. 60 bis 15 Gew.-% Diolen und/oder Kettenverlängerern,
wobei die Polyadditionsprodukte endständig Hydroxylgruppen tragen, eine Funktionalität von 2 aufweisen und die Molmassen zwischen 4 500 und 10 000, liegen.

2. Hydroxyl- und uretdiongruppenhaltige Polyadditionsprodukte nach Anspruch 1,
dadurch gekennzeichnet,
daß als Diole Ethylenglykol, Butandiol-1.4, Pentandiol-1.5, Hexandiol-1.6, 3-Methylpentandiol-1.5, 2.2.4(2.4.4)-Trimethylhexandiol (Isomerengemisch) sowie Hydroxypivalinsäureneopentylglykolester eingesetzt werden.

3. Hydroxyl- und uretdiongruppenhaltige Polyadditionsprodukte nach den Ansprüchen 1 oder 2,
dadurch gekennzeichnet,
daß als Kettenverlängerer lineare hydroxylgruppenhaltige Polyester mit einer Molmasse zwischen 250 und 2 000, eingesetzt werden.

4. Hydroxyl- und uretdiongruppenhaltige Polyadditionsprodukte nach Anspruch 3,
dadurch gekennzeichnet,
daß die linearen, hydroxylgruppenhaltigen Polyester aufgebaut sind aus mindestens je einem Monomeren, ausgewählt aus Ethylenglykol, Butandiol-1.4, Pentandiol-1.5, Hexandiol-1.6, 3-Methylpentandiol-1.5, 2.2.4(2.4.4)-Trimethylhexandiol sowie Hydroxypivalinsäureneopentylglykolester, 2-Methylpropandiol, 2.2-Dimethylpropandiol, Diethylenglykol, Dodecandiol-1.12, trans- und cis-Cyclohexandimethanol und Bernstein-, Adipin-, Kork-, Azelain-, Sebacinsäure, 2.2.4(2.4.4)-Trimethyladipinsäure (Isomerengemisch), E-Caprolacton und Hydroxycapronsäure.

5. Hydroxyl- und uretdiongruppenhaltige Polyadditionsprodukte nach den Ansprüchen 1 bis 4,
dadurch gekennzeichnet,
daß Diol/Kettenverlängerer-Gemische im Verhältnis von 5 : 95 bis 90 : 10 eingesetzt werden.

6. Hydroxyl- und uretdiongruppenhaltige Polyadditionsprodukte nach den Ansprüchen 1 bis 5,
dadurch gekennzeichnet,
daß die Umsetzung der Ausgangsprodukte in Lösemitteln erfolgt und dieses nach erfolgter Reaktion entfernt wird.

7. Hydroxyl- und uretdiongruppenhaltige Polyadditionsprodukte nach den Ansprüchen 1 bis 5,
dadurch gekennzeichnet,
daß die Umsetzung der Ausgangsprodukte lösemittelfrei im Intensivkneter, erfolgt.

8. Hydroxyl- und uretdiongruppenhaltige Polyadditionsprodukte nach den Ansprüchen 1 bis 7,
dadurch gekennzeichnet,
daß zur Umsetzung Katalysatoren, in einer Konzentration von 0,01 bis 1 Gew.-%, bezogen auf die eingesetzten Ausgangsstoffe, eingesetzt werden.

9. Verfahren zur Herstellung von hydroxyl- und uretdiongruppenhaltigen Polyadditionsprodukten aus dem Uretdion des Isophorondiisocyanats und Diolen und/oder Kettenverlängerern, erhältlich durch Umsetzung von
I. 40 bis 85 Gew.-% Uretdion des Isophorondiisocyanats und
II. 60 bis 15 Gew.-% Diolen und/oder Kettenverlängerern,
wobei die Umsetzung der Ausgangsprodukte in Lösemitteln bei Temperaturen von 50 bis 100 °C, die nach erfolgter Reaktion entfernt werden, oder lösemittelfrei im Intensivkneter, bei Temperaturen von 120 bis 190 °C, gegebenenfalls unter Einsatz von 0,01 bis 1 Gew.-% Katalysator, bezogen auf die eingesetzten Ausgangsstoffe, erfolgt.

10. Verfahren nach Anspruch 9,
dadurch gekennzeichnet,
daß als Kettenverlängerer lineare hydroxylgruppenhaltige Polyester mit einer Molmasse zwischen 250 und 2 000, eingesetzt werden.

11. Verwendung der blockierungsmittelfreien, hydroxyl- und uretdiongruppenhaltigen bifunktionellen Polyadditionsprodukte gemäß den Ansprüchen 1 bis 8 in Kombination mit hydroxylgruppenhaltigen Polymeren zur Herstellung von abspaltfreien transparenten oder pigmentierten Polyrethan-Pulverlacken mit hoher Reaktivität.

12. Abspaltfreie transparente oder pigmentierte Polyurethan-Pulverlacke, dadurch gekennzeichnet,
daß sie blockierungsmittelfreie, bifunktionelle hydroxyl- und uretdiongruppenhaltige Polyadditionsprodukte gemäß den Ansprüchen 1 bis 8 in Kombination mit hydroxylgruppenhaltigen Polymeren sowie weitere Zuschlags- und Hilfsstoffe enthalten.

13. Polyurethan-Pulverlacke nach Anspruch 12,
dadurch gekennzeichnet,
daß ein OH/NCO-Verhältnis von 1 : 0,5 bis 1,2 zugrunde liegt.

14. Polyurethan-Pulverlacke nach den Ansprüchen 12 und 13,
dadurch gekennzeichnet,
daß den PUR-Pulverlacken Katalysatoren zugesetzt werden, bevorzugt organische Zinnverbindungen, in einer Konzentration von 0,03 bis 0,5 Gew.-%, unter Einbeziehung der bereits enthaltenen Katalysatormenge aus der Umsetzung der Komponenten I und II.

15. Polyurethan-Pulverlacke nach den Ansprüchen 12 bis 14,
dadurch gekennzeichnet,
daß als hydroxylgruppenhaltige Polymere Polyester mit einer Funktionalität > 2, einer OH-Zahl von 20 bis 200 mg KOH/g, einer Viskosität < 60 000 mPa·s, bei 160 °C und einem Schmelzpunkt ≥ 70 °C und ≤ 120 °C, eingesetzt werden.

16. Verwendung der PUR-Pulverlacke nach den Ansprüchen 12 bis 15 zum Aufbringen auf Substrate für hitzehärtbare Überzüge sowie die daraus hergestellten beschichteten hitzegehärteten Substrate.

## Claims

1. Polyaddition products containing hydroxyl and uretdione groups and prepared from the uretdione of isophorone diisocyanate and diols and/or chain extenders, which products are obtainable by reacting
I. from 40 to 85% by weight of the uretdione of isophorone diisocyanate and
II. from 60 to 15% by weight of diols and/or chain extenders,
the polyaddition products carrying terminal hydroxyl groups and having a functionality of 2 and the molecular masses being from 4 500 to 10 000.

2. Polyaddition products containing hydroxyl and uretdione groups according to claim 1, characterized in that ethylene glycol, butane-1,4-diol, pentane-1,5-diol, hexane-1,6-diol, 3-methylpentane-1,5-diol, 2,2,4(2,4,4)-trimethylhexanediol (isomer mixture) and neopentylglycol hydroxypivalate are employed as diols.

3. Polyaddition products containing hydroxyl and uretdione groups according to either of claims 1 and 2, characterized in that linear polyesters containing hydroxyl groups and having a molecular mass of from 250 to 2 000 are employed as chain extenders.

4. Polyaddition products containing hydroxyl and uretdione groups according to claim 3, characterized in that the linear polyesters containing hydroxyl groups are composed of at least one monomer in each case, selected from ethylene glycol, butane-1,4-diol, pentane-1,5-diol, hexane-1,6-diol, 3-methylpentane-1,5-diol, 2,2,4(2,4,4)-trimethylhexanediol and neopentylglycol hydroxypivalate, 2-methylpropanediol, 2,2-dimethylpropanediol, diethylene glycol, dodecane-1,12-diol, trans- and cis-cyclohexanedimethanol and succinic, adipic, suberic, azelaic and sebacic acids, 2,2,4(2,4,4)-trimethyladipic acid (isomer mixture), ε-caprolactone and hydroxycaproic acid.

5. Polyaddition products containing hydroxyl and uretdione groups according to any of claims 1 to 4, characterized in that diol/chain extender mixtures are employed in a ratio of from 5 : 95 to 90 : 10.

6. Polyaddition products containing hydroxyl and uretdione groups according to any of claims 1 to 5, characterized in that the reaction of the starting materials is carried out in a solvent which is removed after reaction has taken place.

7. Polyaddition products containing hydroxyl and uretdione groups according to any of claims 1 to 5, characterized in that the reaction of the starting materials is carried out without solvent in an intensive kneading apparatus.

8. Polyaddition products containing hydroxyl and uretdione groups according to any of claims 1 to 7, characterized in that catalysts are employed for the reaction in a concentration of from 0.01 to 1% by weight, based on the starting materials employed.

9. A process for the preparation of polyaddition products containing hydroxyl and uretdione groups from the uretdione of isophorone diisocyanate and diols and/or chain extenders, which products are obtainable by reacting
I. from 40 to 85% by weight of the uretdione of isophorone diisocyanate and
II. from 60 to 15% by weight of diols and/or chain extenders,
the reaction of the starting materials being carried out either at temperatures of from 50 to 100°C in a solvent which is removed after reaction has taken place, or without of from 120 to 190°C , with or without the use of from 0.01 to 1% by weight of catalyst, based on the starting materials employed.

10. A process according to claim 9, characterized in that linear polyesters containing hydroxyl groups and having a molecular mass of from 250 to 2 000 are employed as chain extenders.

11. The use of bifunctional polyaddition products containing hydroxyl and uretdione groups according to any of claims 1 to 8 which are free from blocking agents, in combination with polymers containing hydroxyl groups, for the production of transparent or pigmented, highly reactive polyurethane powder coatings which are free from elimination products.

12. Transparent or pigmented polyurethane powder coatings which are free from elimination products, characterized in that they comprise bifunctional polyaddition products containing hydroxyl and uretdione groups according to any of claims 1 to 8 which are free from blocking agents, in combination with polymers containing hydroxyl groups, and also comprise further additives and auxiliaries.

13. Polyurethane powder coatings according to claim 12, characterized in that the underlying OH/NCO ratio is 1 : 0.5 to 1.2.

14. Polyurethane powder coatings according to either of claims 12 and 13, characterized in that catalysts, preferably organotin compounds, are added to the PUR powder coatings in a concentration of from 0.03 to 0.5% by weight, including the quantity of catalyst which they already contain from the reaction of components I and II.

15. Polyurethane powder coatings according to any of claims 12 to 14, characterized in that polyesters having a functionality > 2, an OH number of from 20 to 200 mg of KOH/g, a viscosity < 60 000 mPa·s at 160°C and a melting point ≥ 70°C and ≤ 120°C are employed as hydroxyl group-containing polymers.

16. The use of PUR powder coatings according to any of claims 12 to 15 for application to substrates for heat-curable coatings, and coated, heat-cured substrates produced therefrom.

## Revendications

1. Produits de polyaddition contenant des groupes hydroxyle et uretdione à partir de l'uretdione du diisocyanate d'isophorone et de diols et/ou de prolongateurs de chaîne que l'on peut obtenir par réaction de :
I- 40 à 85 % en poids d'uretdione de diisocyanate d'isophorone,
II- 60 à 15 % en poids de diols et/ou de prolongateurs de chaîne,
dans lesquels les produits de polyaddition portent des groupes hydroxyle terminaux, possèdent une fonctionnalité de 2 et dans lesquels les masses molaires se situent entre 4 500 et 10 000.

2. Produits de polyaddition contenant des groupes hydroxyle et uretdione, selon la revendication 1,
caractérisés en ce que
comme diols on met en oeuvre l'éthylèneglycol, le butane-diol-1,4, le pentanediol-1,5, l'hexanediol-1,6, le 3-méthylhexanediol-1,5, le 2,2,4(2-4-4)-Triméthylhexanediol (mélange d'isomères) ainsi que l'ester de néopentylglycol d'acide hydroxypivalique.

3. Produits de polyaddition contenant des groupes hydroxyle et des groupes uretdione, selon les revendications 1 ou 2,
caractérisés en ce que
comme prolongateurs de chaîne on met en oeuvre des polyesters linéaires contenant des groupes hydroxyle ayant une masse molaire comprise entre 250 et 2000.

4. Produits de polyaddition contenant des groupes hydroxyle et des groupes uretdione, selon la revendication 3,
caractérisés en ce que
les polyesters linéaires contenant des groupes hydroxyle, sont constitués en au moins un monomère choisi parmi l'éthylèneglycol, le butanediol-1,4, le pentanediol-1,5, l'hexanediol-1,6, le 3-méthylpentanediol-1,5, le 2,2,4(2,4,4,)-triméthylhexanediol, ainsi que l'ester de néopentylglycol de l'acide hydroxypivalique, le 2-méthylpropanediol, le 2,2-diméthylpropanediol, le diéthylèneglycol, le dodécanediol-1,12, le trans et le cis cyclohexanediméthanol et les acides succiniques, adipique, subérique, azelaïque, sébacique, les acides 2,2,4(2,4,4)-triméthyladipiques (mélanges d'isomères), l'ε-caprolactone et l'acide hydroxycaproïque.

5. Produits de polyaddition contenant des groupes hydroxyle et des groupes uretdione, selon les revendications 1 à 4,
caractérisés en ce qu'
on met en oeuvre des mélanges diol/prolongateur de chaîne, dans un rapport de 5:95 à 90:10.

6. Produits de polyaddition contenant des groupes hydroxyle et des groupes uretdione, selon les revendications 1 à 5,
caractérisés en ce que
la réaction des produits de départ s'effectue dans un solvant et en ce qu'on élimine celui-ci après que la réaction se soit produite.

7. Produits de polyaddition contenant des groupes hydroxyle et des groupes uretdione, selon les revendications 1 à 5,
caractérisés en ce que
la réaction des produits de départ s'effectue en l'absence de solvant dans un malaxeur intensif.

8. Produits de polyaddition contenant des groupes hydroxyle et des groupes uretdione, selon les revendications 1 à 7,
caractérisés en ce que
pour la réaction on met en oeuvre des catalyseurs à une concentration de 0,01 à 1 % en poids rapporté aux matières premières mises en oeuvre.

9. Procédé de production de produits de polyaddition contenant des groupes hydroxyle et des groupes uretdione, à partir de l'uretdione du diisocyanate d'isophorone et de diols et/ou de prolongateurs de chaîne, que l'on peut obtenir par réaction de :
I- 40 à 85 % en poids de l'uretdione du diisocyanate d'isophorone, et
II- 60 à 15 % en poids de diols et/ou de prolongateurs de chaîne
dans lequel la réaction des produits de départ s'effectue dans des solvants à des températures allant de 50 à 100°C, qui sont éliminés après que la réaction se soit produite, ou sans solvant dans un mélangeur intensif à des températures allant de 120 à 190°C, le cas échéant en utilisant de 0,01 à 1 % en poids, de catalyseur rapporté aux matières premières mises en oeuvre.

10. Procédé selon la revendication 9,
caractérisé en ce qu'
on met en oeuvre comme prolongateur de chaîne, des polyesters linéaires contenant des groupes hydroxyle ayant une masse molaire comprise entre 250 et 2.000.

11. Utilisation des produits de polyaddition bifonctionnels contenant des groupes hydroxyle et des groupes uretdione, exempts d'agent de blocage, selon les revendications 1 à 8 en combinaison avec des polymères contenant des groupes hydroxyle, en vue de l'obtention de laques en poudre de polyuréthanne, transparentes ou pigmentées, exemptes de fissure, ayant une réactivité élevée.

12. Laques en poudre de polyuréthanne transparentes ou pigmentées exemptes de fissure,
caractérisées en ce qu'
elles referment des produits de polyaddition bifonctionnels, exempts d'agent de blocage contenant des groupes hydroxyle et des groupes uretdione, conformément aux revendications 1 à 8,
en combinaison avec des polymères contenant des groupes hydroxyle, ainsi que d'autres substances de supplément et des adjuvants.

13. Laques en poudre de polyuréthanne selon la revendication 12,
caractérisées en ce qu'
un rapport OH/NCO de 1:0,5 à 1,2 sert de base.

14. Laques en poudre de polyuréthanne selon les revendications 12 et 13,
caractérisées en ce qu'
on ajoute aux laques en poudre de polyuréthanne, des catalyseurs, de préférence des composés organiques de l'étain, à une concentration de 0,03 à 0,5 % en poids, tout en intégrant la quantité de catalyseur déjà contenue provenant de la réaction des composants I et II.

15. Laques en poudre de polyuréthanne, selon les revendications 12 à 14,
caractérisées en ce qu'
on met en oeuvre comme polymères contenant des groupes hydroxyle, des polyesters ayant une fonctionnalité > 2, un indice d'OH de 20 à 200 mg KOH/g, une viscosité < 60 000 mPa.s à 160°C, et un point de fusion ≥ 70°C et ≤ 120°C.

16. Utilisation des laques en poudre de polyuréthanne selon les revendications 12 à 15 pour l'application sur des substrats pour revêtements durcissables à la chaleur ainsi que les substrats durcis à la chaleur enduits, fabriqués à partir de ceux-ci.
